# EUROPEAN PATENT APPLICATION

(11) **EP 1 274 046 A1**
(43) Date of publication of application: **08.01.2003**
(21) Application number: 01116103.1
(22) Date of filing: 03.07.2001
(51) Int. Cl.: G06T 15/70

(54) **Method and system for generating animations from text**

(71) Applicant: FunMail, Inc, Livermore, CA 94550 (US)
(72) Inventor: Lavine, Adam, D-94550 Livermore, CA 94550 (US); Yu-Jen Chen, Dennis, D-94550 Livermore, CA 94550 (US); Rodgers, Dwight, D-08540 Princeton, NJ 08540 (US)
(74) Representative: Lenzing, Andreas, Dr.

(57) **Abstract**

The process of turning plain text into animated sequences using a digital image generator, which can be a computer or digital video system is disclosed. A text string is analyzed to determine the concepts contained in the string. An Animation Compositor is used to compose an animated sequence based on the selected concept. The disclosed invention combined with the animation compositor can take a text string and display an animated story, which is conceptually related to the text.

## Description

### CROSS REFERENCE TO RELATED APPLICATIONS

This application claims the priority of non-provisional U.S. Application Serial No. 09/870,317 filed on May 30, 2001 and entitled "TEXT-TO-ANIMATION PROCESS" by Adam Lavine and Dennis Chen, the entire contents and substance of which are hereby incorporated in total by reference.

The process of generating animation from a library of stories, props, backgrounds, music, component animation and story structure using an animation compositor has already been described in a previous patent application Serial No. PCT/US00/13055 filed on May 12, 2000 entitled "System and Method for Generating Interactive Animated Information and Advertisements."

### BACKGROUND OF THE INVENTION

### 1. Field of the Invention.

This invention relates to a system and method for generating an animated sequence from text.

### 2. Description of Related Art

The act of sending an e-mail or wireless message (SMS) has become commonplace. A software tool, which allows a user to compose a message, is opened and a text message is typed in a window similar to a word processor. Most e-mail software allows a user to attach picture files or other related information. Upon receipt, the picture is usually opened by a web browser or other software. The connection between the main idea in the attachment and main idea in the text is made by the person composing the e-mail.

The following patents and/or publications are considered relevant when considering the disclosed invention:

US Patent No. 5,903,892 issued to Hoffert et al. on June 11, 1999 entitled "Indexing of Media Content on a Network" relates to a method and apparatus for searching for multimedia files in a distributed database and for displaying results of the search based on the context and content of the multimedia files.

US Patent No. 5,818,512 issued to Fuller on October 6, 1998 entitled "Video Distribution System." discloses an interactive video services system for enabling store and forward distribution of digitized video programming comprising merged graphics and video data from a minimum of two separate data storage devices. In a departure from the art, an MPEG converter operating in tandem with an MPEG decoder device that has buffer capacity merges encoded and compressed digital video signals stored in a memory of a video server with digitized graphics generated by and stored in a memory of a systems control computer. The merged signals are thin transmitted to and displayed on a TV set connected to the system. In this manner, multiple computers are able to transmit graphics or multimedia data to a video server to be displayed on the TV set or to be superimposed onto video programming that is being displayed on the TV set.

A paper entitled "Analysis of Gesture and Action in Technical Talks for Video Indexing" Department of Computer Science, University of Toronto, Toronto Ontario M5S 1A4 Canada. This paper presents an automatic system for analyzing and annotating video sequences of technical talks. The method uses a robust motion estimation technique to detect key frames and segment the video sequence into subsequences containing a single overhead slide. The subsequences are stabilized to remove motion that occurs when the speaker adjusts their slides. Any changes remaining between frames in the stabilized sequences may be due to speaker gestures such as pointing or writing and the inventors use active contours to automatically track these potential gestures. Given the constrained domain they define a simple "vocabulary" of actions which can easily be recognized based on the active contour shape and motion . The recognized actions provide a rich annotation of the sequence that can be used to access a condensed version of the talk from a web page.

US Patent No. 5,907,704 entitled "Hierarchical Encapsulation of Instantiated Objects in a Multimedia Authoring System Including Internet Accessible Objects" issued to Gudmundson et al. on May 25, 1999 discloses an application development system, optimized for authoring multimedia titles, which enables its users to create selectively reusable object container merely by defining links among instantiated objects. Employing a technique known as Hierarchical Encapsulation, the system automatically isolates the external dependencies of the object containers created by its users, thereby facilitating reusability of object containers and the object they contain in other container environments. Authors create two basic types of objects: Elements, which are the key actors within and application, and Modifiers, which modify an Element's characteristics. The object containers (Elements and Behaviors - i.e., Modifier containers) created by authors spawn hierarchies of object including the Structural Hierarchy of Elements within Elements, and the Behavioral Hierarchy, within an Element of Behaviors (and other Modifiers within Behaviors. Through the technique known as Hierarchical Message Broadcasting, objects automatically receive messages sent to their object container. Hierarchical Message Broadcasting may be used advantageously for sending messages between other, such as over Local Area Networks or the Internet. Even whole object containers may be transmitted and remotely recreated over the network. Furthermore, the system may be embedded within a page of the World Wide Web.

An article entitled "Hypermedia EIS and the World Wide Web" by G. Masaki J. Walls, and J. Stockman and presented in System Sciences, 1995. Vol. IV, Proceedings of the 28^{th} Hawaii International Conference of the IEEE. ISBN: 0-8186-06940-3, argues that the hypermedia executive information system (HEIS) can provide facilities needed in the process and products of strategic intelligence. HEISs extend traditional executive information systems (EISs). A HEIS is designed to facilitate reconnaissance in both the internal and external environments using hypermedia and artificial intelligence technologies. It is oriented toward business intelligence, which recognized the managerial vigilance.

An article entitled: "A Large-Scale Hypermedia Application Using Document Management and Web Technologies" by V. Balasubramanian, Alf Bashian and Daniel Porcher.

In this paper, the authors present a case study on how we have designed a large-scale hypermedia authoring and publishing system using document management and Web technologies to satisfy our authoring, management, and delivery needs. They describe a systematic design and implementation approach to satisfy requirements such as a distributed authoring environment for non-technical authors, templates, consistent user interface, reduce maintenance, access control, version control, concurrency control, document management, link management, workflow, editorial and legal reviews, assembly of different views for different target audiences, and full-text and attribute-based information retrieval. They also report on design tradeoffs due to limitations with current technologies. It is their conclusion that large scale Web development should be carried out only through careful planning and a systematic design methodology.

### BRIEF SUMMARY OF THE INVENTION

A process of turning text into computer generated animation is disclosed. The text message is an "input parameter" that is used to generate a relevant animation. A process of generating animation from a library of stories, props, backgrounds, music, component animation, and story structure using an animation compositor has already been described in our previous patent application Serial no. PCT/US00/13055 filed on May 12, 2000 entitled "System and Method for Generating Interactive Animated Information and Advertisements." The addition of the method of turning text into criteria for selecting the animation component completes the text to animation process.

Generating animation from text occurs in 3 stages. Stage 1 is a concept analyzer, which analyzes a text string to determine its general meaning. Stage 2 is an Animation Component Selector which chooses the appropriate animation components from a database of components through their associated concepts. Stage 3 is an Animation Compositor, also known as a "Media Engine," which assembles the final animation from the selected animation components. Each of these steps is composed of several sub-steps, which will be described in more detail in the detailed description of the invention and more fully illustrated in the following drawings.

### BRIEF DESCRIPTION OF THE SEVERAL VIEWS OF THE INVENTION

Fig. 1 is a flow chart illustrating the 3 stages of the Text to Animation Process.

Fig. 2 is a detail of Stage 1 - The Concept Analyzer.

Fig. 3 is a detail of Step 2, Pattern Matching.

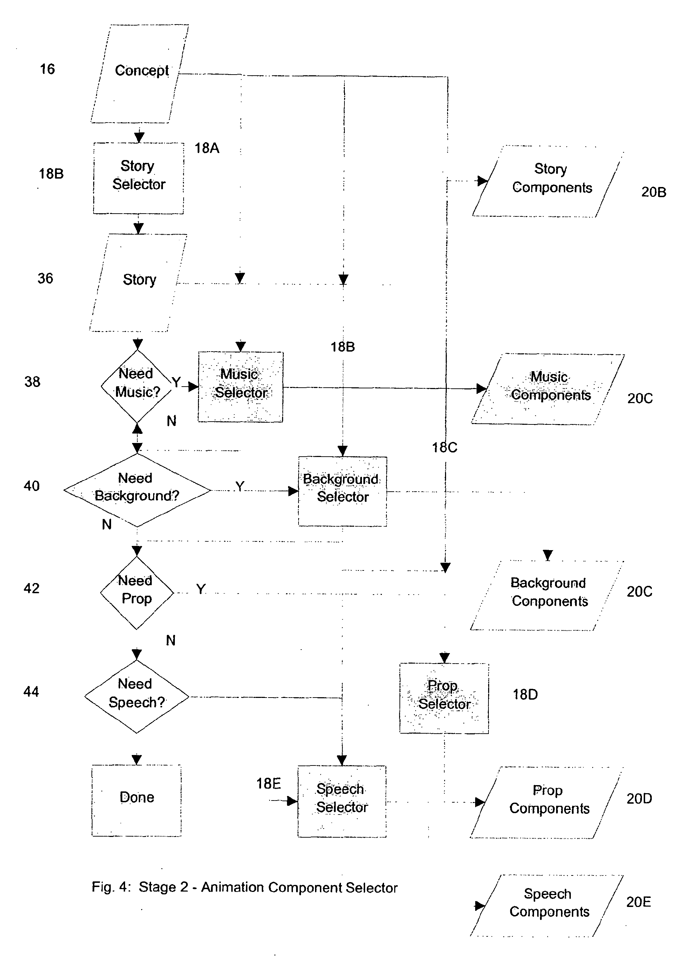

Fig. 4 is a flow chart illustrating the Stage 2 - The Animation Component Selector.

Fig. 5 is a detail of the Animation Compositor.

### DETAILED DESCRIPTION OF THE INVENTION:

During the course of this description, like numbers will be used to identify like elements according to the different views which illustrate the invention.

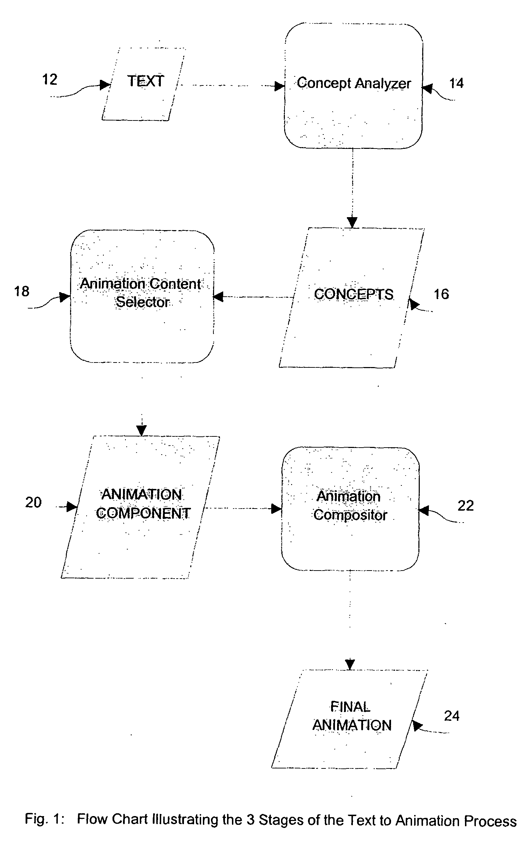

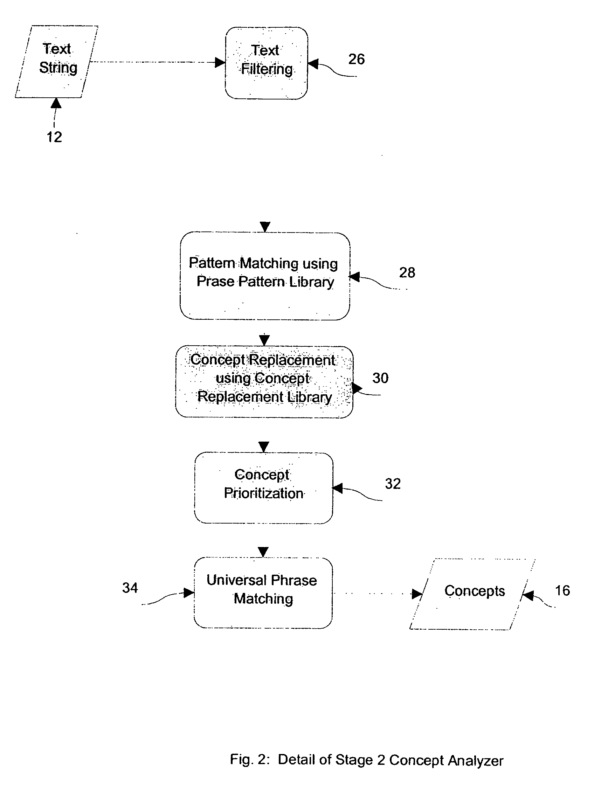

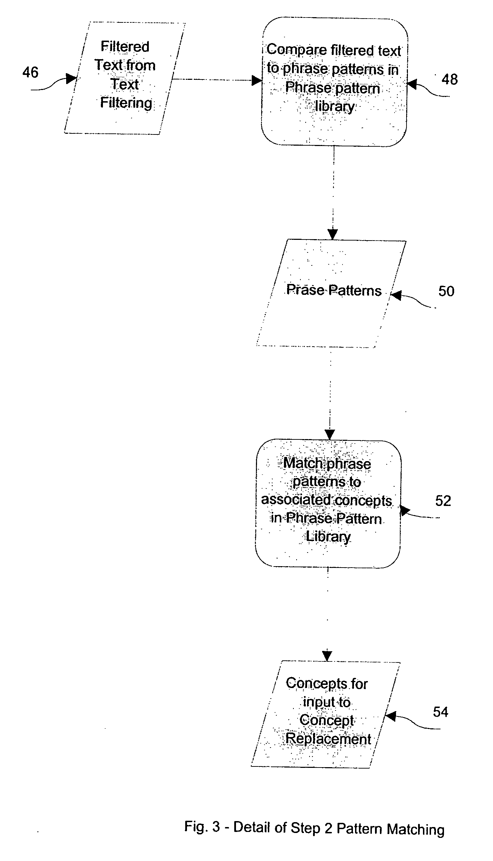

The process of converting Text-to-Animation happens in 3 stages.
Stage 1: Concept Analyzer Fig 1.
Stage 2: Animation Component Selector Fig. 2.
Stage 3: Animation Compositor Fig 3.

A method of turning text into computer generated animation is disclosed as described. The process of generating animation from a library of stories, props, backgrounds, music, and speech Fig. 3 has already been described in our prior patent application Serial no. PCT/US00/13055 filed on May 12, 2000 entitled "System and Method for Generating Interactive Animated Information and Advertisements." This disclosure focuses on a process of turning plain text into criteria for the selection of animation components.

The purpose of a text string is usually to convey a message. Thus the overall meaning of the text must be determined by analyzing the text to determine the concept being discussed. Visual images, which are related to the concept being conveyed by the text, can be added to enhance the reading of the text by providing an animated visual representation of the message. Providing a visual representation of a message can be performed by a person by reading the message, determining the meaning, and composing an animation sequence, which is conceptually related to the message. A computer may perform the same process but must be given specific instructions on how to 1) determine the concept contained in a message, 2) choose animation elements appropriate for that concept, and 3) compile the animation elements into a final sequence which is conceptually related to the message contained in the text.

A novel feature of this invention is that the message contained in the text is conceptually linked to the animation being displayed. A concept is a general idea thus a conceptual link is a common general idea. The disclosed invention has the ability to determine the general idea of a text string, associate that general idea with animation components and props which convey the same general idea, compile the animation into a sequence, and display the sequence to a viewer.

### Stage 1: Concept Analyzer.

The "Concept" 16 contained in a text string 12 is the general meaning of the message contained in the string. A text message such as "Let's go to the beach on your birthday." contains 2 concepts. The first would be the beach concept and the second would be the birthday concept.

The concept recognizer takes plain text and generates a set of suitable concepts. It does this in the following steps:

### Step 1: Text Filtering.

Text Filtering 26 removes any text that is not central to the message, text that may confuse the concept recognizer and cause it to select inappropriate concepts. For example, given the message "Mr. Knight, please join us for dinner," the text filter should ignore the name "Knight" and return the "Dinner" concept, not the medieval concept of "Knight." A text-filtering library is used for this filtering step.

The text filtering library is organized by the language of the person composing the text string. This allows the flexibility of having different sets of filters for English (e.g. Mr. or Mrs.), German (Herr, Frau), Japanese (san), etc.

### Step 2: Pattern Matching.

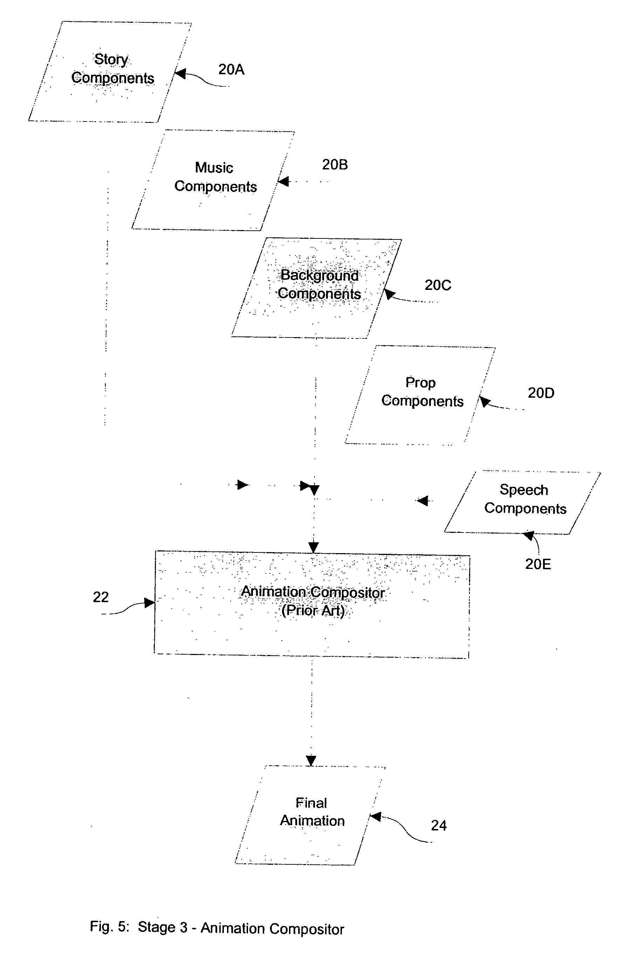

Pattern Matching 28 compares the filtered text against the phrase pattern library 48 to find potential concept matches. For example, the following illustrates how the pattern matching works Fig. 5.

Text to be pattern matched: "Let's go get a hamburger after class and catch a flick." The two main concepts in this text string are hamburger and movie. The invention would decide which concepts are contained in the text string by comparing the text with Phrase Patterns contained in the Phrase Pattern library 48. Each group of Phrase Patterns is associated with a concept in the Phrase Pattern Library 52. By matching the text string to be analyzed with a known Phrase Pattern 52, the concept 54 can be determined. Thus by comparing the text string against the Phrase Pattern Library, the matching concepts of Hamburger and Movie are found.

To simplify the construction of the phrase pattern library, most phrase patterns are done in singular form. If the original phrase contains plural forms then the singular form is constructed an used in the comparison.

The phrase pattern library is organized by the language and geographic location of the person composing the text string. This allows the flexibility of having different sets of phrases for British English, American English, Canadian English, etc.

Pattern matching 28 is a key feature in the invention since it is through pattern matching that a connection is made between the text string and a concept.

### Step 3: Concept Replacement.

Concept Replacement 30 examines how each concept was selected and eliminates the inappropriate concepts. For instance, in the text string, "Let's have a hot dog" the "Food" concept should be selected and not the "Dog" concept. A concept replacement library is used for this step. The concept replacement library is organized by the language of the person composing the text string. This allows the flexibility of having different sets of replacement pairs for each language. For example, in Japanese, "jelly fish" contains the characters "water" and "mother". If the original text string contains "water mother", then the Jellyfish concept should be selected, not the mother concept.

### Step 4: Concept Prioritization.

Concept Prioritization 32 weights the concepts based on pre-assigned priority to determine which concept should receive the higher priority. In the text string "Let's go to Hawaii this summer." the concept "Hawaii" is more important than the concept "Summer."

### Step 5: Universal Phrase Matching.

Universal Phrase Matching 34 is triggered when no matches are found. The text is compared to a library of universally understood emoticons and character combinations. For instance the pattern ":)" matches to "Happy" and ": (" matches to "Sad."

### Stage 2: Animation Component Selector.

The Animation Component Selector 18A can choose the appropriate components through their associated concepts, after the Concept Analyzer identifies the appropriate concepts. Every animation component is associated with one or more concepts. Some examples of animation components are:
Stories 20A - Stories supply the animation structure and are selected by the Story Selector 18A. Stories have slots where other animation or media components can be inserted.
Music 20B - Music 38 is an often overlooked area of animation, and has been completely overlooked as a messaging medium. Music can place the animation in a particular context, set a mood or communicate meaning. Music is chosen by the Music Selector 18B
Backgrounds 20C - Backgrounds are visual components which are to be used as a backdrop behind an animation sequence to place the animation in a particular context. Backgrounds are selected by the Background Selector 18C.
Props 20D - Props are specific visual components which are inserted into stories and are selected by the Prop Selector 18D..
Speech 20E- Prerecorded Speech Components 20E by actors inserted into the story can say something funny to make the animation even more interesting.

Stories 36 can be specific or general. Specific stories are designed for specific concepts. For instance, an animation of BBQ outdoors could be a specific story for both BBQ and Father's Day concepts.

General Stories have open prop slots or open background slots. For instance, if the message is "Let's meet in Paris," a general animation with a background of the Eiffel Tower could be used. The message of "Let's have tea in London." would trigger an animation with Big Ben in the background, and a teacup as a prop. Similarly, "Let's celebrate our anniversary in Hawaii," would bring up an animation of a beach, animated hearts, finished off with Hawaiian music.

Music 20B may be added after the story is chosen. If chosen the music selector 18B selects music appropriate to the concept and sends the music components 20B on to the Animation Compositor 22.

If a Background 20C is required, the Background Selector 18C selects a background related to the concept 16 and sends the Background Components 20C on to the Animation Compositor 22.

If a prop 20D is required, the Prop Selector 18D selects a prop related to the concept 16 and sends the Prop Component 20D on to the Animation Compositor.

If Speech is required, the Speech Selector 18E selects spoken words related to the concept and sends the Speech Component 20E on to the Animation Compositor.

### Stage 3: Animation Compositor

The Animation Conpositor 22 assembles the final animation 24 from the selected animation components 20A-D. The Animation Compositor has already been described in a previous patent application Serial no. PCT/US00/13055 filed on May 12, 2000 entitled "System and Method for Generating Interactive Animated Information and Advertisements."

As can be seen from the description, the animation presented along with the text is not just something to fill in the screen. The animation is related to the general idea of the text message and thus enhances the message by displaying a multi-media presentation instead of just words to the viewer. Adding animation to a text message makes the words come alive through the added animation.

While the invention has been described with reference to the preferred embodiment thereof, it will be appreciated by those of ordinary skill in the art that modifications can be made to the system, and steps of the method without departing from the spirit and scope of the invention as a whole.

## Claims

1. A method for generating animated sequences from text strings of a given language using a digital image generator said method comprising the steps of:
(a) analyzing a given text string to determine the concept embodied in said text string;
(b) selecting animation components corresponding to the concept chosen in step (a) from a set of animation components; and,
(c) composing the animation components into an animation sequence to produce a final animation which is conceptually related to said text string,
whereby said animated sequence which is conceptually related to said text string is displayed to a viewer.

2. The method of claim 1 wherein said digital image generator is a computer.

3. The method of claim 2 wherein said step (a) of analyzing a given text string to determine the concept embodied in said text string consists of:
(d) filtering said text string to remove any text that is not central to the message contained in said text string;
(e) matching said filtered text with concepts by comparing said filtered message against a phrase pattern library;
(f) replacing inappropriate concepts by examining how each concept was selected using a concept replacement library;
(g) prioritizing concepts by weighting each concept based on a pre-assigned priority system when there are multiple concepts contained in said text string to ensure that the most important concepts are given the highest priority; and,
(h) matching phrases with concepts by comparing them to a library of universally understood emoticons and character combinations when no matches are found using steps (d) through (g).

4. The method of claim 3 whereby said Phrase Pattern library in said matching step (e) consists of a listing of phrases in said given language of said text string and concepts corresponding with each phrase.

5. The method of claim 4 whereby said Concept Replacement Library is a listing of concepts in said given language of said text string corresponding to specific words or phrases in said given language.

6. The method of claim 5 whereby said Concept Replacement Library also includes a listing of emoticons and concepts corresponding to each emoticon.

7. The method of claim 6 whereby the step of selecting animation components corresponding to the concept chosen in step (a) consists of selecting animation components which are conceptually linked to said text string from a library of: stories, props, backgrounds, music and speech.

8. The method of claim 7 whereby stories contain slots in which other animation components may be inserted.

9. The method of claim 8 whereby props comprise visual components conceptually related to said text string which are inserted into stories.

10. The method of claim 9 whereby backgrounds comprise visual components conceptually related to said text string used as a backdrop behind an animation to place the animation in a particular context.

11. The method of claim 10 whereby music comprises prerecorded audio components conceptually related to said text string which are presented simultaneously with said animation sequence to place said animation sequence in a particular context.

12. The method of claim 11 whereby speech comprises prerecorded words conceptually related to said text string and presented simultaneously with said animation sequence.

13. The method of claim 12 whereby the step of composing the animation components into an animation sequence to produce a final animation which is conceptually related to said text string consists of assembling the final animation sequence from the selected animation components with an Animation Compositor.

14. A system for generating animated sequences from text strings in a given language using a digital image generator said system comprising:
(a) analyzing means for analyzing a given text string to determine the concept embodied in said text string;
(b) selecting means for selecting animation components corresponding to the concept chosen in step (a) from a set of animation components; and,
(c) composing means for composing the animation components into an animation sequence to produce a final animation which is conceptually related to said text string,
whereby said animated sequence which is conceptually related to said text string is displayed to a viewer.

15. The system of claim 14 wherein said analyzing means for analyzing a given text string to determine the concept embodied in said text string comprises:
(a) filtering means for filtering said text string to remove any text that is not central to the message contained in said text string;
(b) matching means for matching said filtered text with concepts by comparing said filtered message against a phrase pattern library;
(c) replacing means for replacing inappropriate concepts by examining how each concept was selected;
(d) weighting means for weighting concepts based on a pre-assigned priority system when there are multiple concepts contained in said text string to ensure that the most important concepts are given the highest priority; and,
(e) matching means for matching phrases with concepts by comparing them to a library of universally understood emoticons and character combinations when no matches are found using steps (d) through (g).

16. The system of claim 15 whereby the selecting means for selecting animation components corresponding to the concept chosen in analyzing means (a) from a set of animation components consists of selecting a combination of animation components which are conceptually linked to said text string from a library of; stories, props, backgrounds, music and speech.

17. The method of claim 16 whereby said Phrase Pattern library in said matching means (e) consists of a listing of phrases in said given language of said text string and concepts corresponding to each phrase.

18. The method of claim 17 whereby said Concept Replacement Library is a listing of concepts in said given language of said text string corresponding to specific words or phrases in said given language.

19. The method of claim 18 whereby said Concept Replacement Library also includes a listing of emoticons and concepts corresponding to each emoticon.

20. The system of claim 19 whereby stories contain slots in which other animation components may be inserted.

21. The system of claim 20 whereby props comprise visual components conceptually related to said text string which are inserted into stories.

22. The system of claim 21 whereby backgrounds comprise visual components conceptually related to said text string used as a backdrop behind an animation to place the animation in a particular context.

23. The system of claim 22 whereby music comprises prerecorded audio components conceptually related to said text string which are presented simultaneously with said animation sequence to place said animation sequence in a particular context.

24. The system of claim 23 whereby speech comprises prerecorded words conceptually related to said text string and presented simultaneously with said animation sequence.

25. The system of claim 24 whereby the composing means for composing the animation components into an animation sequence to produce a final animation which is conceptually related to said text string consists of assembling the final animation sequence from the selected animation components with an Animation Compositor.

26. The system of claim 25 further comprising a computer programmed to carry out said system.
